# FASCICULE DE BREVET EUROPEEN

(11) **EP 2 455 825 B1**
(45) Date de publication et mention de la délivrance du brevet: **17.08.2016**
(21) Numéro de dépôt: 10191646.8
(22) Date de dépôt: 18.11.2010
(51) Int. Cl.: G04B 17/06, G04B 18/02

(54) **Procédé d'appairage et d'ajustement d'un sous-ensemble d'horlogerie**
Verfahren zur Paarung und Angleichung einer Untereinheit einer Uhr
Method for matching and adjusting a timepiece subassembly

(43) Date de publication de la demande: 23.05.2012
(73) Titulaire: Nivarox-FAR S.A., 2400 Le Locle (CH)
(72) Inventeur: Verardo, Marco, 2336, Les Bois (CH); Barthoulot, Philippe, 25120, Maiche (FR)
(74) Mandataire: Giraud, Eric

(56) Documents cités:
- EP-A1- 2 128 723
- EP-A1- 2 423 764
- WO-A1-2012/007460
- CH-A- 347 491
- CH-A- 390 808
- CH-A- 542 469
- CH-D- 1 283 368
- FR-A- 893 305
- FR-A- 1 589 411
- US-A1- 2002 070 203

## Description

L'invention concerne un procédé d'ajustement de caractéristiques physiques d'un composant ou d'un sous-ensemble de pièce d'horlogerie, notamment aux fins d'ajustement d'inertie ou/et d'équilibrage ou/et d'ajustement de fréquence.

L'invention concerne un procédé d'ajustement en inertie d'un balancier d'horlogerie comportant une serge périphérique et mobile en pivotement autour d'un axe de balancier.

L'invention concerne encore un procédé d'ajustement en couple de rappel d'un spiral d'horlogerie.

L'invention concerne encore un procédé d'ajustement d'un ensemble balancier-spiral d'horlogerie comportant au moins un balancier, lequel comporte une serge périphérique, et au moins un ressort-spiral, attachés l'un à l'autre au niveau d'une virole, ledit ensemble balancier-spiral étant mobile en pivotement autour d'un axe de balancier.

L'invention concerne, de façon générale, le domaine de la micromécanique, et plus particulièrement le domaine de l'horlogerie.

Tout particulièrement l'invention concerne les ajustements et réglages d'organes-réglants, et en particulier des balanciers de montres ou de pièces d'horlogerie, ou des ensembles balancier-spiral de montres ou de pièces d'horlogerie.

### Arrière plan de l'invention

Malgré l'extrême précision des usinages et leur grande reproductibilité, des ajustements doivent presque toujours être opérés, soit lors d'une opération d'assemblage, soit, plus fréquemment, lors d'une opération de réglage ou de mise au point, en particulier pour un réglage de balourd et un ajustement d'inertie dans le cas des pièces mobiles, et un réglage de fréquence dans le cas d'un oscillateur.

C'est en particulier au stade assemblé qu'il est nécessaire de parfaire l'appairage de certains composants qui, pris indépendamment, sont dans les tolérances d'usinage ou de réalisation, mais qui ne peuvent être assemblés purement et simplement en raison des contraintes de service propre au sous-ensemble ou à l'ensemble monté.

C'est en particulier le cas des organes réglants des pièces d'horlogerie, et tout particulièrement des ensembles balancier-spiral. Il apparaît en effet que les réglages de balourd et d'ajustement d'inertie, tant statique que dynamique, sont déjà très délicats au stade des composants individuels, et que ces opérations de mise au point se révèlent extrêmement complexes quand les composants sont assemblés entre eux. En particulier les réglages dynamiques se révèlent délicats à mettre en oeuvre.

Pour l'ajustement d'un sous-ensemble balancier-spiral, on connaît différentes techniques, dont deux sont plus couramment appliquées.

Le système dit « Omégamétrique » consiste à effectuer :
- un classage des spiraux ;
- un classage des balanciers ;
- un appairage d'un balancier choisi dans une classe particulière, avec un spiral choisi lui aussi dans une classe particulière, ces classes étant compatibles entre elles.

Ce procédé impose un important stock des composants et des classes relativement larges.

En alternative on connaît le système dit « Spiromatic » :
- on assemble en général un spiral sur un balancier ;
- on coupe ce spiral à la bonne longueur, pour l'obtention d'un couple adapté à l'inertie du balancier

Ce procédé ne permet pas de garantir avec précision la position terminale du ressort, d'où perte de performance chronométrique.

Le document CH 347 491 A au nom de Kienzle Uhrenfabriken AG suit cette logique, et décrit un tri par classes des ressorts-spiraux selon leur couple, et une combinaison de classes. La mesure du couple de rappel d'un spiral est effectuée pour son tri dans une classe. Ce brevet décrit un procédé selon lequel les spiraux et les balanciers sont fabriqués capables d'une fréquence supérieure à la fréquence nominale, et où les spiraux sont combinés avec des balanciers de moment d'inertie adéquats pour obtenir une fréquence d'oscillation particulière.

Le document CH 12 833/68 au nom de Société des Fabriques de Spiraux Réunis décrit aussi l'obtention 'un ensemble balancier-spiral de fréquence désirée, à partir de séries de spiraux de couple préalablement mesuré et de séries de balanciers de moment d'inertie préalablement mesuré. L'ajustement se fait par l'ajout de masses additionnelles sur les balanciers. Ces balanciers sont prévus pour une fréquence supérieure à la moniale, de façon à ce que la correction se fasse dans le sens unique de rajout de matière. La masse additionnelle est rigide et son centre de gravité coïncide avec celui du balancier. L'ajout de masse additionnelle est prévu pour modifier tous les balanciers d'une même classe. Les masses additionnelles sont classées par fourchettes de moment d'inertie.

Le document EP 2 128 723 au nom de Sigatec décrit un procédé où on classe des spiraux par valeurs de couple élastique mesuré. Puis on choisit, parmi l'ensemble des balanciers, celui dont le moment d'inertie permet d'obtenir la fréquence d'oscillation requise avec un spiral classifié, il s'agit d'un appairage.

Le document CH 542 469 A au nom de Ebauches SA décrit un ajout de matière par projection par un micro-doseur.

Ces techniques classiques sont, soit coûteuses, soit médiocres quant à la précision des résultats obtenus.

### Résumé de l'invention :

L'invention se propose de pallier les limites de l'art antérieur, en proposant un procédé simple, efficace, et précis, de constitution, d'appairage et d'ajustement de caractéristiques physiques d'un composant ou d'un sous-ensemble de pièce d'horlogerie, notamment aux fins d'ajustement d'inertie ou/et d'équilibrage ou/et d'ajustement de fréquence. Dans le cas d'un sous-ensemble, il s'agit d'un sous-ensemble mobile en pivotement, comportant d'une part au moins un premier composant et d'autre part au moins un deuxième composant, l'un desdits composants comportant des moyens de rappel agencés pour exercer un couple de rappel élastique, autour dudit axe de pivotement, sur au moins un autre desdits composants.

En particulier l'invention concerne un procédé d'appairage et d'ajustement d'un sous-ensemble balancier-spiral d'horlogerie avec une très bonne performance chronométrique.

Selon l'invention, ce procédé d'appairage et d'ajustement d'un sous-ensemble mobile en pivotement autour d'un axe de pivotement, comportant d'une part au moins un premier composant et d'autre part au moins un deuxième composant, ledit au moins un premier composant comportant des moyens de rappel agencés pour exercer un couple de rappel élastique, autour dudit axe de pivotement, sur ledit deuxième composant, consiste à :

Selon une caractéristique de l'invention, on applique ledit procédé à un dit au moins un premier composant qui est un spiral comportant des moyens de rappel agencés pour exercer un couple de rappel élastique, autour dudit axe de pivotement, sur un balancier, lequel constitue ledit deuxième composant.

L'invention concerne encore une pièce d'horlogerie comportant au moins un organe réglant appairé et ajusté selon ce procédé.

Ainsi, de façon préférée, le procédé d'appairage et d'ajustement d'un sous-ensemble balancier-spiral d'horlogerie mobile en pivotement autour d'un axe de pivotement, comportant au moins un spiral et un balancier, ledit au moins un spiral comportant des moyens de rappel agencés pour exercer un couple de rappel élastique, autour dudit axe de pivotement, sur ledit balancier, consiste à effectuer successivement les opérations selon la revendication 1.

### Description détaillée des modes de réalisation préférés :

L'invention concerne, de façon générale, le domaine de la micromécanique, et plus particulièrement le domaine de l'horlogerie.

Tout particulièrement l'invention concerne les ajustements et réglages d'organes-réglants, et en particulier des balanciers de montres ou de pièces d'horlogerie, ou des ensembles balancier-spiral de montres ou de pièces d'horlogerie.

En particulier l'invention concerne un procédé d'appairage et d'ajustement d'un sous-ensemble balancier-spiral d'horlogerie avec une très bonne performance chronométrique.

L'invention consiste à mettre au point un procédé d'ajustement de caractéristiques physiques, ou/et de balourd, ou/et d'inertie, ou/et de fréquence d'oscillation, d'un composant, et, de préférence, d'un composant ou d'un sous-ensemble mobile en pivotement autour d'un axe de pivotement.

Dans le cas d'un sous-ensemble, il s'agit d'un sous-ensemble mobile en pivotement, comportant d'une part au moins un premier composant et d'autre part au moins un deuxième composant, l'un desdits composants comportant des moyens de rappel agencés pour exercer un couple de rappel élastique, autour dudit axe de pivotement, sur au moins un autre desdits composants.

Selon l'invention, ce procédé d'appairage et d'ajustement d'un sous-ensemble mobile en pivotement autour d'un axe de pivotement, comportant d'une part au moins un premier composant et d'autre part au moins un deuxième composant, ledit au moins un premier composant comportant des moyens de rappel agencés pour exercer un couple de rappel élastique, autour de cet axe de pivotement, sur le deuxième composant, consiste à :
- mesurer le couple de rappel dudit au moins un premier composant, ou le couple résultant des premiers composants s'il y en a une pluralité, et mesurer l'inertie du deuxième composant ;
- puis à corriger l'inertie du deuxième composant ou/et à corriger le couple de rappel dudit au moins un premier composant, ou le couple résultant des premiers composants s'il y en a une pluralité.

Cette correction d'inertie ou/et de couple de rappel est faite selon des tolérances propres au fonctionnement du sous-ensemble concerné.

Naturellement, chacun des premiers composants et deuxièmes composants peut être constitué sous la forme d'un sous-ensemble élémentaire, et les corrections, selon le cas, d'inertie, ou/et de couple de rappel, peuvent être appliquées à certains composants élémentaires de tels sous-ensembles élémentaires, qui sont choisis pour la facilité de mise en oeuvre de ces corrections, par exemple pour leur usinabilité, leur déformabilité, leur aptitude à recevoir un traitement thermique ou de surface, pour leurs propriétés de mémoire de forme, pour leur densité, ou pour toute autre caractéristique ou propriété physique autorisant une correction aisée et précise.

Dans un exemple particulier et préféré d'application de l'invention, le premier composant est un spiral d'horlogerie, et le deuxième composant est un balancier d'horlogerie. Les corrections peuvent alors avantageusement être appliquées, dans le premier cas à des spires ou zones préparées à cet effet, ou dans le deuxième cas à des masselottes, vis réglantes, goupilles ou similaire, ces exemples n'étant nullement exhaustifs.

Dans un mode particulier de mise en oeuvre du procédé, on l'applique à une pluralité de deuxièmes composants, qui pivotent autour du même axe de pivotement. Dans ce cas, au lieu de corriger l'inertie d'un seul deuxième composant, on corrige l'inertie cumulée de la pluralité de ces deuxièmes composants. Selon le cas d'espèce, on peut répartir la correction d'inertie sur les différents deuxièmes composants, ou adopter une autre règle, par exemple en fonction de la facilité de mise en oeuvre de la technique de correction choisie, sur l'un ou l'autre deuxième composant. Selon une règle préférée, on corrige la pluralité des deuxièmes composants, de façon à ce que leur centre d'inertie reste sur l'axe de pivotement.

Dans un premier mode de mise en oeuvre de l'invention, on choisit de corriger l'inertie du deuxième composant.

Dans un deuxième mode de mise en oeuvre de l'invention, on choisit de corriger le couple de rappel du premier composant, ou le couple résultant des premiers composants s'il y en a une pluralité. Dans ce dernier cas, selon le cas d'espèce, on peut répartir la correction du couple de rappel sur les différents premiers composants, ou adopter une autre règle, par exemple en fonction de la facilité de mise en oeuvre de la technique de correction choisie, sur l'un ou l'autre premier composant. Selon une règle préférée, on corrige la pluralité des premiers composants, de façon à ce que au moins leur centre de gravité, et si possible leur centre d'inertie, reste sur l'axe de pivotement.

Dans un troisième mode de mise en oeuvre de l'invention, on choisit de corriger à la fois, l'inertie du deuxième composant, et le couple de rappel du au moins un premier composant.

Pour réduire l'inertie du deuxième composant, différents moyens sont possibles, et cumulables entre eux :
- on corrige l'inertie du deuxième composant vers le moins par déplacement de matière,
- on corrige l'inertie du deuxième composant vers le moins par déplacement de matière.

Pour augmenter l'inertie du deuxième composant, différents moyens sont possibles, et cumulables entre eux :
- on corrige l'inertie du deuxième composant vers le plus par ajout de matière ou/et par déplacement de matière, ou/et
- on corrige l'inertie du deuxième composant vers le plus par déplacement de matière.

Naturellement, ces corrections d'inertie peuvent aussi, s'il en est besoin, être combinées avec des corrections d'axe principal d'inertie, et des reprises de balourd. Quand le deuxième composant est déjà équilibré, dans des tolérances convenables d'équilibrage statique ou/et dynamique, on effectue de préférence les corrections d'inertie de façon équilibrée, ou symétrique selon le cas.

De façon similaire, selon l'invention, on prévoit de corriger le couple de rappel du au moins un premier composant par déplacement de matière.

On peut, encore, avantageusement, modifier ce couple de rappel par un traitement thermique local ou total, sans enlèvement de matière. Cette technologie est avantageuse dans le cas où le au moins un premier composant est un spiral d'horlogerie, et le deuxième composant un balancier d'horlogerie, en effet un tel traitement peut être effectué au stade assemblé du balancier-spiral.

On peut effectuer le déplacement de matière par fusion localisée et déplacement de la phase liquide résultant de cette fusion. En particulier si le composant concernée est en mouvement, par exemple de pivotement, il est avantageux d'utiliser par exemple la force centrifuge pour déplacer un flux de matière en l'éloignant de l'axe de pivotement.

On peut ainsi appliquer le procédé à un tel deuxième composant qui est un un balancier d'horlogerie comportant une serge périphérique et mobile en pivotement autour d'un axe de balancier, pour corriger son inertie.

On peut également appliquer ce procédé à un tel premier composant qui est un spiral comportant des moyens de rappel agencés pour exercer un couple de rappel élastique, pour corriger son couple de rappel.

Cette disposition offre l'avantage de modifier le couple du spiral, par la mise en oeuvre des techniques citées ci-dessus, tout en conservant la longueur du spiral, ce qui pallie les inconvénients de l'art antérieur.

Dans une application préférée de l'invention, on applique ce procédé à un tel premier composant qui est un spiral comportant des moyens de rappel agencés pour exercer un couple de rappel élastique, autour de l'axe de pivotement, sur un balancier, lequel constitue le deuxième composant, ce balancier et ce spiral constituant ensemble un ensemble balancier-spiral.

Ainsi, de façon préférée, le procédé est un procédé d'appairage et d'ajustement d'un organe réglant, notamment d'un sous-ensemble balancier-spiral d'horlogerie mobile en pivotement autour d'un axe de pivotement, comportant au moins un spiral et un balancier, le spiral comportant des moyens de rappel agencés pour exercer un couple de rappel élastique, autour de cet axe de pivotement, sur le balancier, et consiste à effectuer successivement les opérations suivantes :
- mesurer le couple résultant desdits spiraux, et mesurer l'inertie d'un balancier ;
- puis corriger l'inertie du balancier ou/et à corriger le couple de rappel desdits spiraux.

En somme, l'invention permet de s'affranchir du triage par classes des composants, et surtout du stock associé, qui représente une forte immobilisation financière. Elle autorise un appairage facile, en fonction des tolérances fonctionnelles du sous-ensemble.

Quant elle est appliquée à un ensemble réglant horloger, elle garantit son ajustement parfait en fréquence. Il devient de ce fait inutile de conserver une raquetterie pour jouer sur le point d'attache du spiral.

L'invention concerne encore une pièce d'horlogerie comportant au moins un organe réglant, notamment un ensemble balancier-spiral, appairé et ajusté selon ce procédé.

## Revendications

1. Procédé d'ajustement de fréquence d'oscillation, d'un sous-ensemble réglant balancier-spiral d'horlogerie sans raquetterie, mobile en pivotement autour d'un axe de pivotement, comportant d'une part au moins un premier composant qui est un spiral comportant des moyens de rappel agencés pour exercer un couple de rappel élastique, autour dudit axe de pivotement, sur un deuxième composant qui est un balancier, selon lequel :
- on n'effectue ni classement ni tri ni dudit spiral ni dudit balancier ;
- on mesure le couple de rappel dudit spiral et on mesure l'inertie dudit balancier ;
- puis on corrige l'inertie dudit balancier par déplacement de matière dudit balancier, par fusion localisée et déplacement de la phase liquide résultant de ladite fusion,
- on modifie le couple de rappel dudit spiral par un traitement thermique local ou total, sans enlèvement de matière, au stade assemblé dudit ensemble balancier-spiral,

## Patentansprüche

1. Verfahren zum Einstellen der Oszillationsfrequenz einer Unteranordnung, die eine Uhren-Unruh-Spiralfeder ohne Rückervorrichtung, die um eine Drehachse drehbeweglich ist, reguliert und einerseits wenigstens eine erste Komponente umfasst, die eine Spirale ist, die Rückstellmittel aufweist, die dafür ausgelegt sind, auf eine zweite Komponente, die eine Unruh ist, ein elastisches Rückstelldrehmoment um die Drehachse auszuüben, wobei:
- weder eine Klassifizierung noch eine Sortierung weder der Spirale noch der Unruh erfolgt;
- das Rückstelldrehmoment der Spirale gemessen wird und das Trägheitsmoment der Unruh gemessen wird;
- dann das Trägheitsmoment der Unruh durch Verlagern von Material der Unruh durch lokales Schmelzen und Verlagern der flüssigen Phase, die sich aus dem Schmelzen ergibt, korrigiert wird,
- das Rückstelldrehmoment der Spirale durch eine räumlich begrenzte oder vollständige Wärmebehandlung ohne Materialentnahme im zusammengefügten Zustand der Unruh-Spiralfeder-Anordnung modifiziert wird.

## Claims

1. Method for adjusting the oscillation frequency of a sprung balance regulating sub-assembly for timepieces having no index-assembly, rotatably movable about a pivot axis, comprising, on the one hand, at least a first component which is a balance spring comprising return means arranged to exert an elastic return torque, about said pivot axis, on a second component which is a balance wheel, wherein:
- there is no grading or sorting of said balance spring nor of said balance wheel;
- the return torque of said balance spring is measured and the inertia of said balance wheel is measured;
- the inertia of said balance wheel is corrected by displacement of the material of said balance wheel, by local melting and displacement of the liquid phase resulting from said melting,
- the return torque of said balance spring is modified by a local or total heat treatment, without removal of material, at the assembled stage of said sprung balance assembly,
